# EUROPEAN PATENT APPLICATION

(11) **EP 1 048 999 A2**
(43) Date of publication of application: **02.11.2000**
(21) Application number: 00108867.3
(22) Date of filing: 26.04.2000
(51) Int. Cl.: G06F 3/14

(54) **Bitmap transfer**

(30) Priority: 29.04.1999 US 302022
(71) Applicant: MITSUBISHI DENKI KABUSHIKI KAISHA, Tokyo 100-8310 (JP)
(72) Inventor: Akatsu, Shinji, c/o MITSUBISHI DENKI KABUSHIKI K., Tokyo 100-8310 (JP); Matsuo, Eiji, c/o MITSUBISHI DENKI KABUSHIKI K., Tokyo 100-8310 (JP); Miura, Shin, c/o MITSUBISHI DENKI KABUSHIKI KAISHA, Tokyo 100-8310 (JP); Masami Matsubara, Fernando, Santa Clara, CA 95054 (US)
(74) Representative: Pfenning, Meinig & Partner GbR

(57) **Abstract**

A method for transmitting bitmap display data between a controller and a video display unit, such as, e.g., a respective set-top box and television set connected via an IEEE 1394 interface, includes receiving first image data at the controller, generating a color lookup table based on the first image data, transmitting the color lookup table from the controller to the video display unit, transmitting the first image data from the controller to the video display unit, receiving second image data at the controller, comparing the second image data to the first image data, generating third image data representing differences between the first image data and the second image data, and transmitting the third image data from the controller to the video display unit.

## Description

### BACKGROUND OF THE INVENTION

### Cross Reference to Related Applications

This application is related to U.S. application Ser. No. 09/140,899, filed August 25, 1998, entitled "BITMAP TRANSFER IN PLUG AND PLAY NETWORK", U.S. application Ser. No. 09/144,678, filed August 31, 1999, entitled "HOME DIGITAL NETWORK INTERFACE", and U.S. application Ser. Nos. [Not Yet Assigned] (attorney docket 235/124), entitled "HOME GATEWAY", [Not Yet Assigned] (attorney docket 235/125), entitled "ADDRESS MAPPING", [Not Yet Assigned] (attorney docket 235/126), entitled "REMOTE MONITORING AND CONTROL", [Not Yet Assigned] (attorney docket 235/127), entitled "GEOGRAPHIC DATA COLLECTION", and [Not Yet Assigned] (attorney docket 235/128), entitled "COMMAND AND CONTROL TRANSFER", all filed on the same day herewith, and all of which are incorporated herein by reference in their entirety.

### Field of the Invention

The present invention pertains generally to the field of home entertainment systems, and more specifically to communication and control technologies in home entertainment systems.

### Background

In the past, a home entertainment system frequently consisted of simply a television set (TV) and a video cassette recorder (VCR). One or two coaxial or composite cables interconnected the TV and VCR from input-to-output and/or output-to-input respectively. However, in recent years, home entertainment systems have become increasingly complex.

Advances in home electronic devices, such as the compact disk (CD) player, digital-video disc (DVD) player, gaming systems, surround sound audio systems, hand held video cameras. etc., naturally compelled consumers to connect the additional devices to their home entertainment system. Each new device added at least two more wires (generally, power and input/output) to the complex web of wires snaking their way in and out of the various devices.

Originally, switch boxes were employed to cut down on the complexity of the interconnections between the various devices. For example, a simple "A/B" switch box allowed a user to selectively choose one input or another, without having to disconnect and re-engage coaxial cables between the devices. As the number of devices in home entertainment systems increased, however, the use of A/B switch boxes to interconnect the devices becomes cumbersome and inefficient.

Notably, consumers generally desire less wires, simpler interconnect schemes and, as the functionality and sophistication of home entertainment devices increase, to dispose of the myriad individual component remote controls needed to operate the respective devices. Indeed, most remote control "features" are never used (see, e.g., "The Complexity Problem: Industrial Design", Atlantic Monthly, Vol. 271, No. 3, March 1993, p. 96); if for no other reason, this is due to the differing sequences and/or number of steps involved with the control and operation of each respective device.

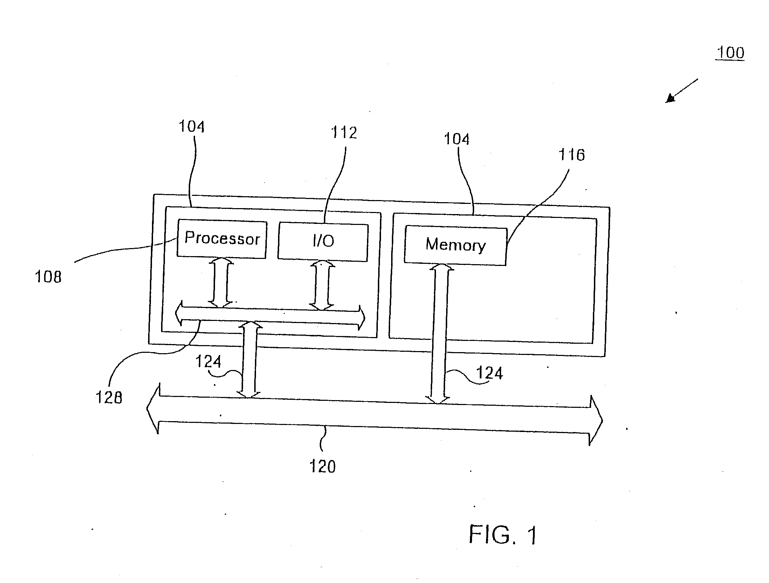

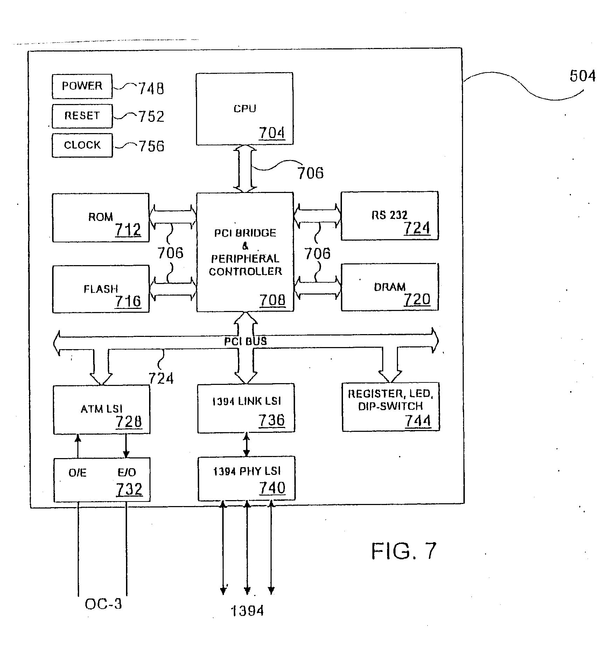

One solution to the aforementioned control problem is proposed in U.S. Patent 5,675,390 (the "'390 patent") by Schindler et al. As depicted in FIG. 1 of the '390 patent, an entertainment system is centrally controlled by a personal computer. According to the Schindler et al. system, control is consolidated in the personal computer, wherein a "hub and spoke", or "star" type communication topology is employed --- i.e., with all communications passing through the personal computer (or hub). By this configuration, each device requires its own dedicated connection to the personal computer. Such a solution may work well for tightly integrated home electronics equipment and a sophisticated computer user. However, it requires an even greater number of interconnecting wires than were previously employed. (Note the number of I/O plugs depicted in FIG. 7 of the '390 patent). Further, such a system is not scalable. That is, as new devices are to be added to the system, additional corresponding adapters/controllers must be added to the personal computer.

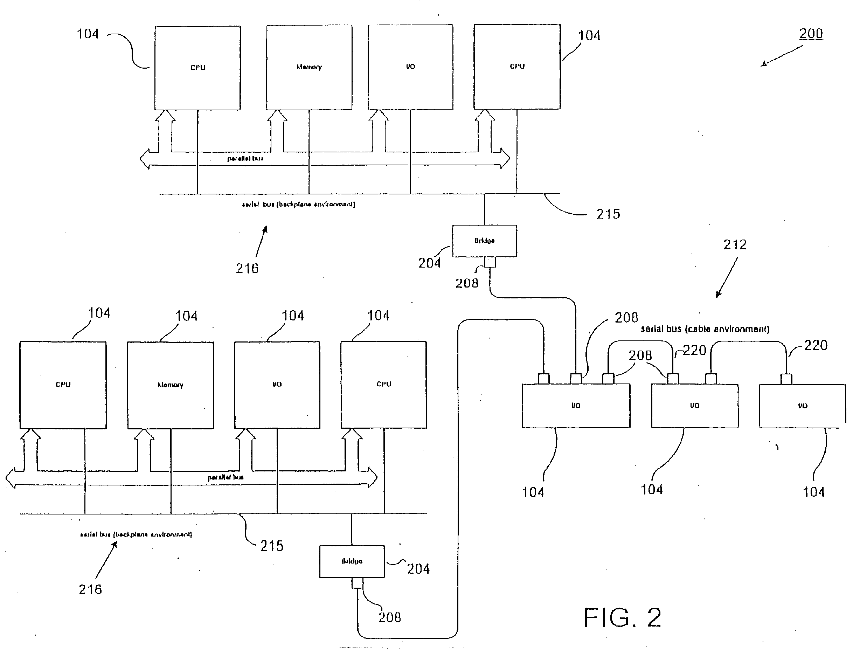

A similar solution is proposed in U.S. Patent 5,722,041 (the "'041 patent") by Freadman. FIG. 2 of the '041 patent best depicts Freadman's home entertainment system. Like Schindler et al., control is centrally located in a personal computer. Media feeds are through a combination multi-channel modem and analog radio frequency mixer, which connects to a number of terminal devices through a coaxial cable. Although a reduction in the number of wires is accomplished, shared functionality between the devices is minimal, e.g., one device doesn't control another device and vice-versa.

In particular, adding a user-operated personal computer to control a home entertainment system network does not, in itself, reduce complexity. In fact, it may increase the complexity. The computer is often difficult, if not cumbersome to control. Hardware and software components generally need to be configured to communicate, and the devices properly initialized. Upgrades to either peripheral devices (e.g., VCRs, TVs, etc.) or the computer itself may necessitate a complete overhaul of the system operating software, thereby introducing incompatibilities and uncertainties in the system performance.

With regard to the myriad interconnection wires in more complex home entertainment systems, one solution is the IEEE 1394-1995 standard and its extensions IEEE 1394a, and IEEE 1394b, which are referred to herein as "IEEE 1394". In one embodiment, a IEEE 1394 cable is a six strand cable: one strand for power, one strand for ground, two strands for data, and two strands for strobes used to synchronize the data strands. In an alternative embodiment, a four strand cable can be used, omitting the power and ground strands. IEEE 1394 cable also comprises a shield, which prevents electromagnetic interference. At its core, IEEE 1394 cable is essentially a high performance serial bus, having data rates as of this present writing of up to 400 megabits per second.

Advantageously, the IEEE 1394 bus reduces the need for the myriad wires in a home entertainment system, as the component electronic devices may be designed to receive power and communication through the IEEE 1394 cable, thereby reducing the connections needed for most devices to as few as a single cable in a backplane bus environment. The IEEE 1394-1995 standard provides a specification for aspects of the physical, link and transaction layers for implementing of the IEEE 1394 bus, including provisions for such functions as resetting the bus, bus arbitration, node configuration, standard packet structures, initializing packet transmission, sending and receiving asynchronous packets, sending and receiving isochronous packets, transaction control, and error detection and correction.

Communication over IEEE 1394 bus differs from many previous technologies in that it is purely digital. In particular, data carried on the IEEE 1394 bus is either digital from the source (e.g., a CD-ROM), or it must be converted by an analog-to-digital converter before being placed on the IEEE 1394 bus. Further, communication in a IEEE 1394-based system is peer-to-peer, i.e., each device (a.k.a. "node") on the IEEE 1394 bus can communicate with any other node without requiring communication/control requests to be processed through a central device/node (e.g., as is required in a "client-server" type configuration). In a IEEE 1394-based system, the controller can reside in any node, so in a sense, the IEEE 1394 bus itself becomes the controller.

Challenges for proponents of IEEE 1394 have been not been so much at the lower layers of operation, that is in the physical, link and transaction layers (although bridges between protocols and data packet structure continue to be areas of contention), but rather in the high layers of the network protocol stack, such as the application layer. Recent developments in the broadcast television and cable industries, such as high definition television (HDTV) and consolidation in the cable broadcast industry are exponentially expanding the number of services and content available to consumers. To this end, interoperability between home electronic devices is strongly desired, as are common and/or standard functionality, ease of use and scalability. As such, there is a need for a system to control and manage the expanding array of devices and services that can be connected and supported, respectively, in a IEEE 1394-based home entertainment system.

### SUMMARY OF THE INVENTION

In accordance with a first aspect of the present invention, a method is provided for transmitting bitmap display data between a controller and a video display unit, such as, e.g., a respective set-top box and television set connected via an IEEE 1394 interface, wherein the method includes:
receiving first image data at the controller (e.g., over a cable or twisted pair);
generating a color lookup table based on the first image data;
transmitting the color lookup table from the controller to the video display unit;
transmitting the first image data from the controller to the video display unit;
receiving second image data at the controller;
comparing the second image data to the first image data;
generating third image data representing differences between the first image data and the second image data; and
transmitting the third image data from the controller to the video display unit.

As will be apparent to those skilled in the art, other and further aspects and advantages of the present invention will appear hereinafter.

### BRIEF DESCRIPTION OF THE DRAWINGS

Preferred embodiments of the present invention are illustrated by way of example, and not by way of limitation, in the figures of the accompanying drawings, in which like reference numerals refer to like components, and in which:
FIG. 1 depicts an exemplary IEEE 1394 module architecture:
FIG. 2 depicts a exemplary IEEE 1394 network topology;
FIG. 3 depicts an exemplary cable-based IEEE 1394 topology;
FIG. 4 depicts an exemplary IEEE 1394 node protocol stack;
FIG. 5 depicts a home gateway bridging multiple external service providers with a IEEE 1394-based network;
FIG. 6 is a functional block diagram of the home gateway of FIG. 5;
FIG. 7 is an alternate block diagram of the home gateway, illustrating hardware components;
FIG. 8 is block diagram illustrating a firmware stack for the home gateway;
FIG. 9 depicts a protocol stack for MPEG transport over the IEEE 1394-based home entertainment system network of FIG. 5;
FIG. 10 depicts a protocol stack for IP routing over the home entertainment system network of FIG. 5;
FIG. 11 depicts a protocol stack for IP plug-and-play and DNS/DHCP routing over the home entertainment system network of FIG. 5;
FIG. 12 depicts a protocol stack for bitmap display data transfer between devices of the home entertainment system of FIG. 5;
FIG. 13 is a flowchart depicting a preferred bitmap transfer protocol;
FIG. 14 depicts a preferred color lookup table structure employed in the bitmap transfer protocol;
FIG. 15 depicts a preferred image data structure;
FIG. 16 depicts an address mapping table;
FIG. 31 is a block diagram of a preferred hardware architecture for double-buffering; and
FIG. 32 is a flowchart depicting a method for double-buffering of bitmap transfer data.

### DETAILED DESCRIPTION OF THE PREFERRED EMBODIMENTS

The IEEE 1394-1995 standard, which is hereby fully incorporated herein by reference for all that it describes and teaches, provides background information for the following description and figures in the accompanying drawings. In particular, selected portions of the IEEE 1394-1995 standard are described with reference to FIGS. 1 through 4.

### IEEE 1394 OVERVIEW

FIG. 1 depicts an exemplary IEEE 1394 module 100, which comprises a plurality of addressable nodes 104. Each node 104 may comprise a processor unit 108 and an I/O unit 112 interconnected via a local bus 128. Alternatively, a node 104 may comprise a memory unit 116. Each node 104 connects to a IEEE 1394 carrier 120 via a respective bus connector 124.

FIG. 2 depicts exemplary IEEE 1394 physical network topology 200, which comprises two IEEE 1394 "backplane environments" 216 respectively bridged to a IEEE 1394 "cable environment" 212.

In a backplane environment 216, the physical topology is a multidrop bus 215. The physical media includes two, single ended conductors that run the length of the backplane and have connectors distributed thereon for connecting a plurality of IEEE 1394 nodes 104.

In a cable environment 212, the physical topology is a "noncyclic" network (meaning that closed loops are not supported) with finite branches and extent. Respective IEEE 1394 cables 220 connect together ports 208 on different nodes 104. Each port 208 typically comprises terminators, transceivers, and arbitration logic circuitry (not shown). The cables 220 and ports 208 function, in part, as cable repeaters, which repeat signals incident thereon to an adjacent node 104. This repeating feature allows nodes 104 in the cable environment 212 to simulate a single, logical bus. When two differing IEEE 1394 buses are connected together, e.g., in a backplane environment 216 or in a cable environment 212, a bridge 204 is used to convert communications between the different network environments.

In accordance with the IEEE 1394 standard, a sixty-four bit addressing scheme is employed by the IEEE 1394 network 200. The upper sixteen bits of each address represent the "node_ID". The most significant ten bits of the node_ID identify the particular logical bus or "bus_ID" (e.g., bus 215) in the overall IEEE 1394 network 200. Thus, up to one thousand twenty three buses can be employed in the IEEE 1394 network 200. The next most significant six bits of the node_ID represent a particular node's physical address or "physical_ID". Sixty-three independently addressable nodes (e.g., nodes 104) can reside on a particular IEEE 1394 bus (e.g., bus 215). Various portions of the remaining forty-eight bits of address space are allocated for specific resources, either to a particular bus, or a particular node.

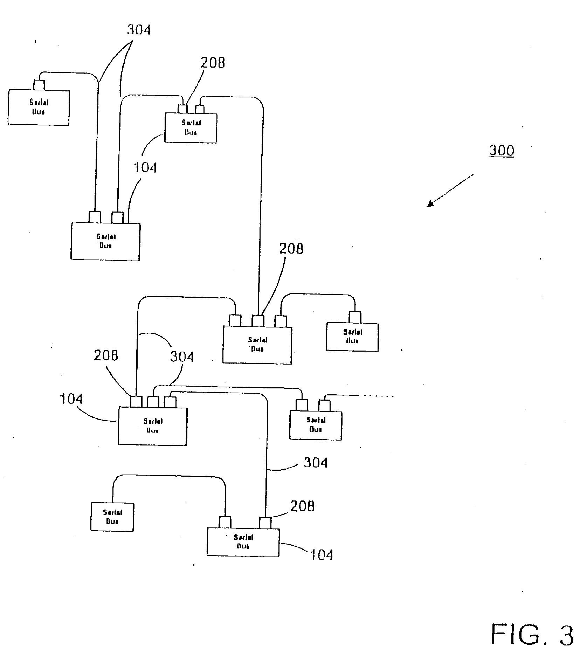

FIG. 3 depicts an exemplary IEEE 1394 cable topology 300. In accordance with this configuration, a number of nodes 104 are "daisy-chained" together between ports 208 by respective IEEE 1394 cables 304. Each node 104 acts as a repeater, repeating signals between one port 208 to the next port so they can be transmitted over the cables 304 between the respective nodes 104.

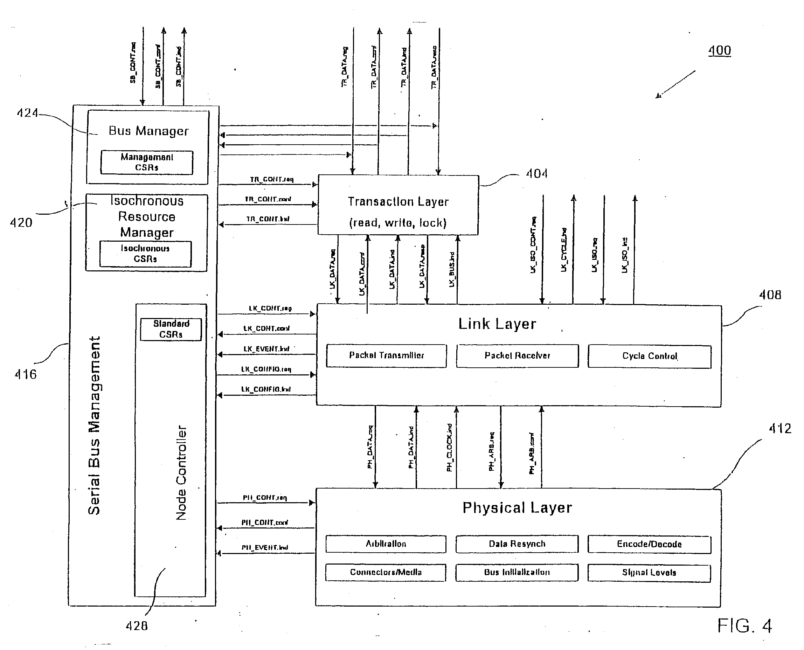

FIG. 4 depicts a protocol stack 400 illustrating the relationships between the hardware and software components within an exemplary IEEE 1394 node 104. In particular, four layers are depicted in the protocol stack 400: transaction layer 404, link layer 408, physical layer 412, and serial bus management layer 416. Additional layers (not shown), such as an application layer, may also be included in the protocol stack 400.

In particular, the transaction layer 404 defines a complete request-response protocol to perform bus transactions to support read, write and lock operations. The transaction layer 404 also provides a path for isochronous management data to get to the serial bus management layer 416.

The link layer 408 provides for one-way data transfer with confirmation of request (i.e., an "acknowledged datagram") service to the transaction layer 404. More particularly, the link layer 408 provides addressing, data checking and data framing for packet transmission and reception, and also provides an isochronous data transfer service directly to the application. This includes generation of timing and synchronization signals (e.g., a "cycle signal").

The physical layer 412 translates logical symbols used by link layer 408 into electrical signals for output onto a IEEE 1394 cable. The physical layer 412 also provides an arbitration service to ensure that only one node at a time is sending data. In a preferred embodiment, the physical layer 412 provides data resynch and repeat service, as well as automatic bus initialization.

The serial bus management layer 416 provides bus management, isochronous resource management and node control. For example, in the cable environment 212 of FIG. 2, the serial bus management layer's 416 isochronous resource manager 420 grants the resources necessary for the respective nodes 104 to allocate and deallocate cooperatively the isochronous resources, channels and bandwidth necessary for efficient and orderly isochronous operations.

A bus manager 424 provides services, such as performance optimization, power and speed management and topology management to other nodes, 104 on the bus. Finally, a node controller 428 manages all control and status registers needed by the nodes 104 on the bus, and communicates with the physical layer 412, the link layer 408, the transaction layer 404 and one or more other application layers (not shown).

### HOME ENTERTAINMENT AND HOME OFFICE SYSTEM

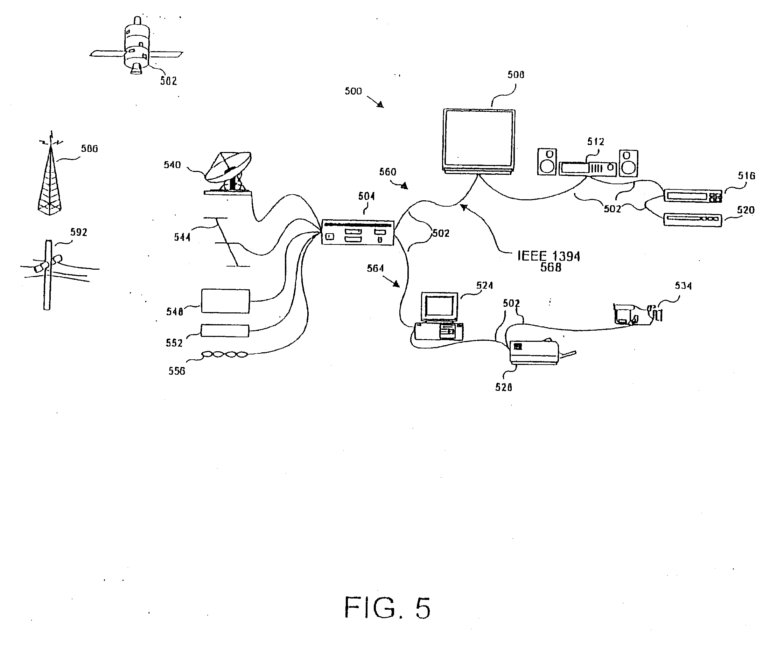

FIG. 5 depicts a home gateway 504 bridging multiple external service providers to a preferred home entertainment and home office system network, referred hereafter as "home entertainment system network" 500. The home entertainment system network 500 is connected by an IEEE 1394 bus 568, which is preferably configured in a cable environment (described above with reference to FIGS. 2-3). In particular, a series of daisy-chained, IEEE 1394 cables 502 interconnect between ports of various electronics components of the home entertainment system 500 to form the IEEE 1394 bus 568. For example, a TV 508, a stereo 512, a VCR 516 and a DVD 520 are connected in one chain 560. In another chain 564, a personal computer 524, a printer 528, and a digital camera 534 are connected.

Each of the respective chains 560 and 564 of electronic components are connected to the home gateway 504, which acts as a bridge between one or more external networks and the respective internal network chains 560 and 564. (i.e., as opposed to a bridge between two different bus environments). For example, the home gateway 504 is capable or receiving media feeds from a satellite 582 via a satellite receiver 540, a broadcast tower 586 via an antenna 544, as well as feeds from local land lines 592 (e.g. copper twisted pair, coaxial or fiber optic cable) via a coaxial cable receiver 548, fiber optic cable receiver 552, or telephone cable receiver 556, respectively. (Note: although the various receivers are shown outside of the home gateway 504, the actual receivers or receptacles can be contained within the home gateway 504 as well. They are shown outside of the home gateway 504 for illustration purposes only.)

The TV 508 preferably includes an internal television adapter that converts data from the IEEE 1394 bus 502 to NTSC (National Television Standards Committee) and/or ATSC (Advanced Television Systems Committee) video signals for presentation on the television screen. In an alternative preferred embodiment, the television adapter is an external device, which connects between the TV 508 and the IEEE 1394 cable 502. In either embodiment, the television adapter preferably includes an off-screen buffer, for image data not presently displayed, but to be displayed in the future, and an on-screen buffer, for image data presently displayed on the television screen. Furthermore, the television adapter can be incorporated into an auxiliary device connected to the television, such as a VCR, a DVD player, or a digital camera.

### HOME GATEWAY

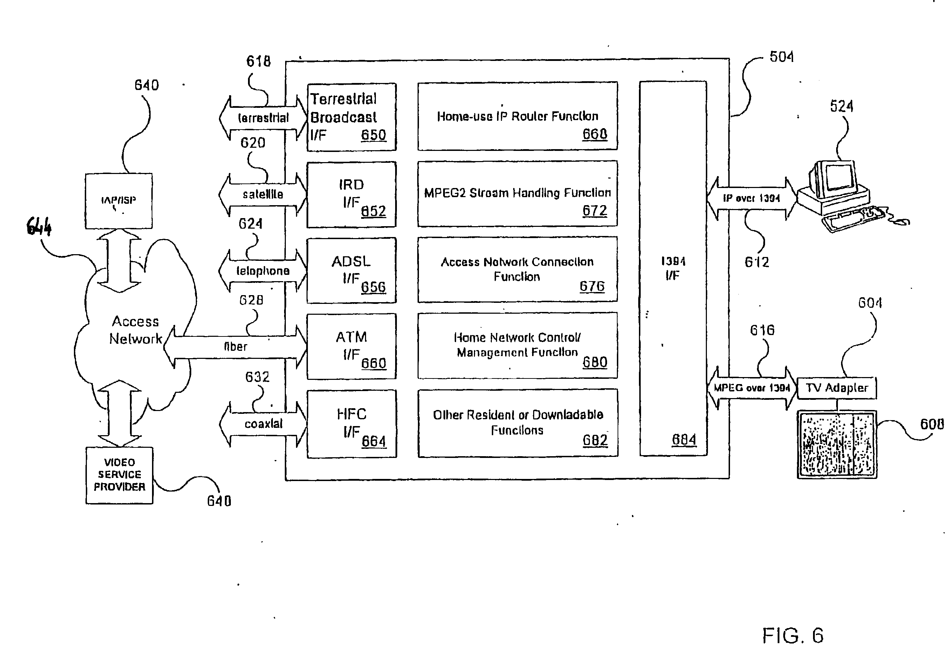

FIG. 6 depicts a functional block diagram for the home gateway 504, as well as for the components communicatively coupled to the home gateway 504.

The gateway 504 comprises one or more interfaces to communicate over an access network 644 through which respective services are provided. For example, services from an internet access provider ("IAP") or internet service provider ("ISP") 640, or from a video service provider ("VSP") 648 can be provided by connecting the respective home gateway interface, e.g., wireless interface "Terrestrial Broadcast I/F" 650, "Satellite I/F" 652, asynchronous digital subscriber line interface "ADSL I/F" 656, asynchronous transfer mode interface "ATM I/F" 660, or hybrid fiber coaxial interface "HFC I/F" 664, to the access network 644 via an appropriate network link, (e.g., terrestrial link 618, satellite link 620, telephone link 624, fiber link 628, or coaxial link 632, respectively). According to one preferred embodiment, adapter slots on the home gateway 504 receive one or more of the above interfaces. Such an embodiment provides for a flexible reconfiguration when new or upgraded communications technologies/hardware are connected to the home entertainment system 500.

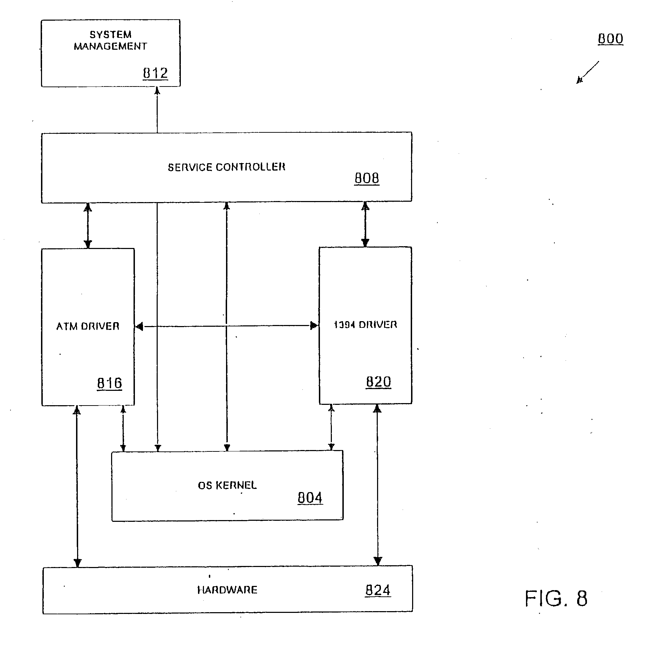

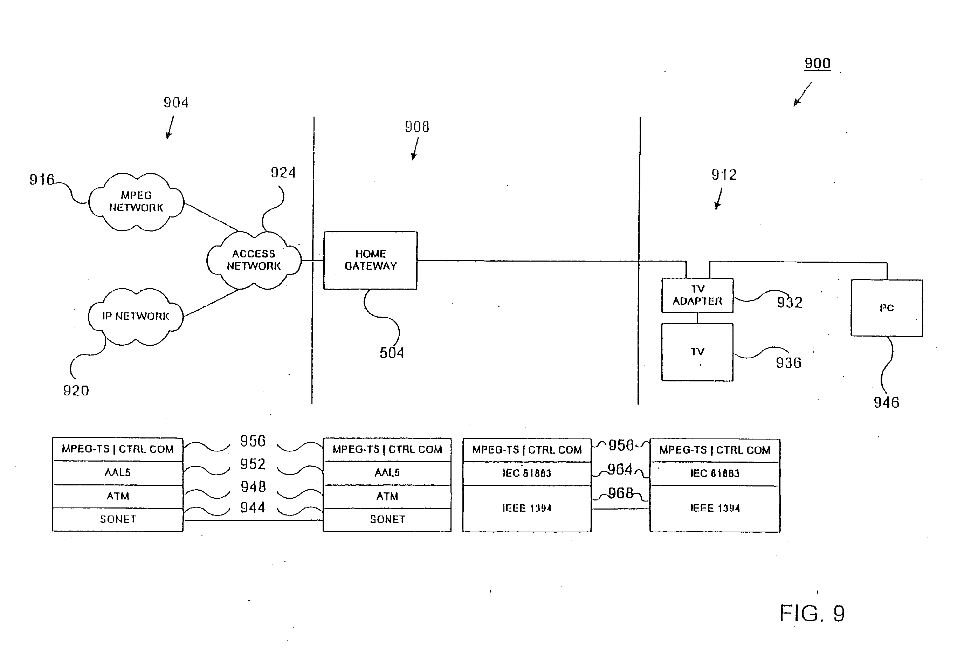

A variety of applications are possible over the access network 644 from either the IAP/ISP 640 and/or the VSP 648, such as internet surfing, MPEG video streams (standard and high definition television), network gaming, an electronic program guide "EPG", and home network control. Accordingly, the home gateway 504 includes hardware and software to enable home-user IP routing 668, MPEG2 stream handling (including on-screen display "OSD" and EPG processing) 672, access network communication control 676, home network control/management 680, and other resident or downloadable functions 682 such as gaming, home automation and directory services. To this end, the firmware stack for the home gateway 504 is described below with reference to FIG. 8. The protocol stacks for implementing the above referenced functions are described below with reference to FIGS. 9 through 12.

The 1394 interface 684 is a necessary component of the home gateway 504 and it is used in conjunction with the network protocols described with reference to FIGS. 9-12. The 1394 interface 684 acts as a bridge between the external network protocols and the IEEE 1394 compliant bus which forms the internal network. For example, the 1394 I/F 684 supports an IP over 1394 link 612 and an MPEG over 1394 link 616, between a personal computer 524 and a TV adapter 604 (which, in one embodiment, converts IEEE 1394 data into an analog or a digital signal for a television 608).

As illustrated in FIG. 7, one embodiment of the home gateway 504 includes a power supply circuit 748, a reset circuit 752, a clock circuit 756, a central processing unit "CPU" 704, a local bus 706, a PCI bridge & peripheral controller 708, non-volatile memory (e.g., ROM 712 and FLASH 716), volatile memory (e.g., DRAM 720), an RS232 interconnect, and a PCI bus 724. Connected to the PCI bus 724 are an ATM LSI interface 728, which provides an ATM bridge and other functionality to the home gateway 504, a synchronous optical network ("SONET") interface 732, which connects to an optical carrier 3 ("OC-3") level port, a 1394 LINK LSI 736, a 1394 PHY LSI, with three IEEE 1394 ports, and a register, LED and dip-switch unit 744.

Off-the-shelf hardware components are preferrably employed in the home gateway 504. For example, a presently preferred hardware component specification is set forth in Table 1. Where a particular manufacturer's product is preferred, it is specified.

**Table 1**

| | |
|---|---|
| CPU | NR4650 133MHz (NKK Micro Devices) |
| DRAM | 8 MB |
| ROM | 128 kB |
| FLASH | 4 MB |
| PCI Bridge & Peripheral Controller | NR4650-PSC (NKK Micro Devices) |
| 1394 LINK LSI | MD8411 (Fuji Film Micro Device) |
| 1394 PHY LSI | MD8401 (Fuji Film Micro Device) |
| ATM LSI | LASAR-155 (PMC-Sierra) |
| Internal Bus | PCI |

The CPU 704, ROM 712, FLASH 716, RS232 724 and DRAM 720 are communicatively coupled to each other via PCI bridge & peripheral controller 708 and local bus 706. The PCI bridge & peripheral controller 708 is also connected to the PCI bus 724. The PCI bus 724 is, in turn, connected to the ATM LSI 728, the 1394 LINK LSI 736 and register, LED and dip-switch unit 744.

FIG. 8 depicts a firmware stack 800, employed by the home gateway 504. An operating system (OS) kernel 804 resides at the core of the firmware stack 800, and communicates with a service controller 808, system management 812, ATM driver 816 and 1394 driver 820. The ATM driver 816 communicates with the service controller 808, the 1394 driver 820 and various hardware components 824 (i.e., physical electronics components in the home entertainment system 500.). Similarly, the 1394 driver 820 communicates with the service controller 808, ATM driver 816 and hardware 824.

System management 812 includes functions for initialization, self-diagnostics, system health checking and debugging. Service controller 808 includes functions for MPEG TS and EPG filtering and multicasting, IP routing and terminal functions, MPEG over the 1394 bus and MPEG over ATM, as well as IP over 1394 bus and IP over ATM, address mapping, home network service command and control (e.g., MPEG service control, TV image control, remote handling, and camera control), and other functions (e.g., gaming, home automation, and directory services)

The 1394 driver 820 realizes asynchronous data transmission, isochronous data transmission, physical layer control packet transmission, bus reset and control, root and cycle master processing, configuration status register and configuration ROM handling, bus management and address mapping table updates, whereas the ATM driver 816 realizes ATM pack transmission and ATM permanent virtual connection ("PVC") establishment and release.

The OS kernel 804 provides for task switching, message queue and delivery, interrupt handling, timer management and memory management. Also, the OS kernel 804 provides the electronic device interoperability functions which are used to control home gateway 504.

The hardware 824 represents the physical layer, or lowest layer, of the firmware stack 800.

### PROTOCOL STACKS

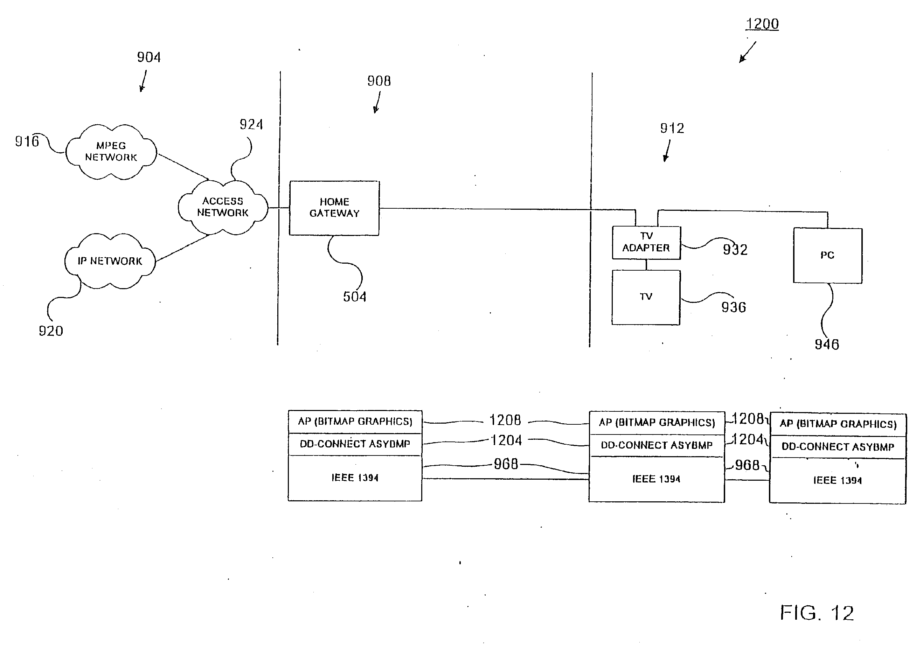

FIGS. 9 through 12 depict various aspects of the protocol stacks employed between the respective external networks, the home gateway and the internal network(s), which pertain to the home entertainment system network. FIGS. 9-11 pertain to the home gateway 504. FIG. 12 pertains to the protocol stack between home electronic devices located on the home entertainment system network.

Commonly shown in FIGS. 9-12 is an external network 904, a bridge 908, and an internal network (i.e., IEEE 1394 bus) 912. The external network 904 can comprise an MPEG network 916 (e.g., a digital video service provider), and an IP network 920 (e.g., the "Internet"). An access network 924 connects to both the MPEG network 916 and IP network 920. According to one embodiment, the access network 924 is an internet access provider ("IAP") such as, e.g., America Online or @Home. The external network 904 is coupled to the internal network 912 through a bridge 908. The bridge 908 is preferably an home gateway 504. The home gateway 504 converts data and signals from the external network 924 from ATM packets to an IEEE 1394 format, which can be forwarded to the internal network 912. The internal network 912 comprises a television adapter 932 and a standard or high definition television 936 (or alternatively a single unit incorporating a 1394 node and a television) and a personal computer 946. The protocol stacks are depicted in FIGS. 9-12 under the portion of the overall system to which they correspond.

FIG. 9 depicts the protocol stack 900 according to ATM data transmission from an MPEG network 916 to a TV adapter 932.

MPEG data is formatted at the MPEG network 916 from MPEG TS ("transport stream") protocol or control command ("CTRL COM") 956 to ATM adaption layer 5 ("AAL5") 952. From AAL5, the data is converted to ATM data 948, and from ATM 948 it is converted to synchronous optical network "SONET" protocol 944. An ATM network is preferred at the lowest layer, given its high reliability, but in alternative embodiments, a different carrier can be employed (e.g., by replacing the ATM layers).

From the access network 924, data is received at the home gateway 504. At the home gateway 504, the communications from the external network are converted (or "bridged") from an ATM protocol to an IEEE 1394 protocol. Additional protocol layer conversions are shown in FIG. 9, including IEC 61883 964, which formats MPEG data for IEEE 1394 communication and is further described in International Electrotechnical Commission Standard 61883 entitled "Digital Interface for Consumer Audio/Visual Equipment" and which is publicly available from the IEC (www.iec.org). IEEE 1394 protocol 968, is described in the IEEE 1394-1995 standard.

From the gateway 908, data is sent via IEEE 1394 protocol to the internal network 912, where it is subsequently converted back into an MPEG transport stream for presentation/playback on a video display unit. It is further possible with TV adapter 932 to convert the data to an analog signal cable of providing audio/visual data to a standard or high definition television set. Preferably, however, TV 936 is capable of supporting MPEG data.

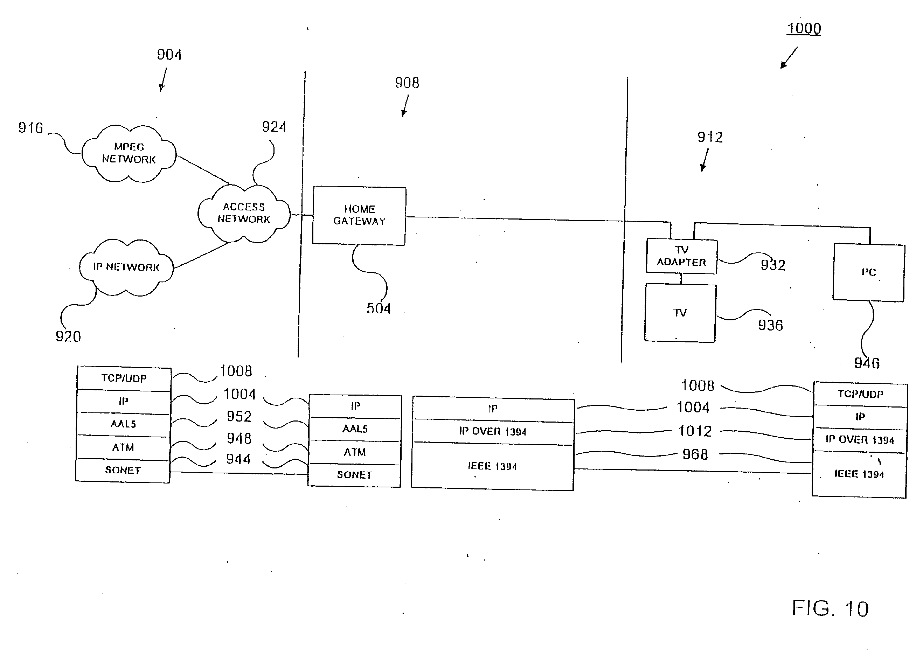

FIG. 10 depicts a protocol stack 1000 according to IP data transmission from IP network 920 to PC 946. The transmission control protocol ("TCP") or user datagram protocol ("UDP") 1008, which are described in publicly available documents Internet REC 793 and Internet RFC 768 respectively, are layered over internet protocol ("IP") 1004, which is described in Internet RFC 791. This facilitates transmission of packet data from an internet (e.g., the Internet or World-Wide Web). At the home gateway 504 and PC 946, an IP over 1394 protocol 1012, described in Internet Engineering Task Force ("IETF") document "IPv4 over IEEE 1394", by Peter Johansson and available at 〈http://www.ietf.org〉, is employed. The IETF document "Ipv4 over IEEE 1394" is incorporated herein by reference in its entirety. The protocol stack 1000 is especially advantageous for finding or exploring content on the World-Wide Web and Internet.

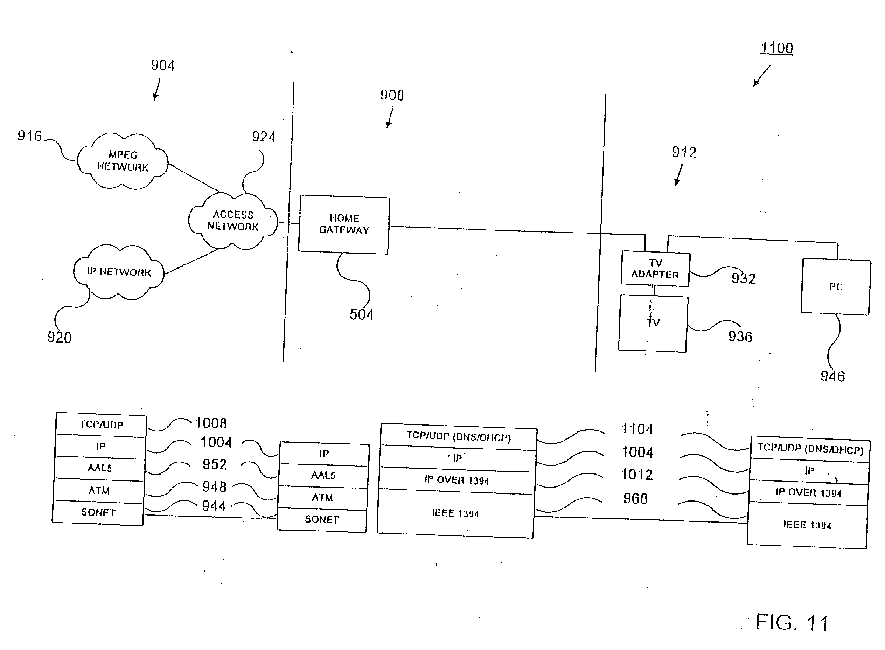

FIG. 11 illustrates a protocol stack 1100 for TCP/IP data transmission from the IP network 920 to the PC 946. In order to facilitate automatic setup and IP address assignments, the protocol stack 1100 supports a domain name system ("DNS"), as described in Internet RFCs 1034 and 1035, and dynamic host configuration protocol ("DHCP").

FIG. 12 illustrates a protocol stack 1200 for bitmap transfer between devices (e.g., from the home gateway 504 or PC 946 to the TV adapter 932) over the internal network 912. The protocol stack 1200 employs additional and previously non-described protocol "DD-Connect AsyBmp" 1204. The "bitman transfer" protocol is described in further detail below. The "AP" protocol 1208 is simply the particular protocol used at the application layer (e.g., a display protocol or a mouse protocol).

### BITMAP TRANSFER

To reduce demand on system resources, for example, IEEE 1394 cable bandwidth, an asynchronous push protocol, called "bitmap transfer", is preferably employed to send image data from one device (i.e., a personal computer 946 or home gateway 504) to a second device (i.e., a television) within the internal network 912. The bitmap transfer is layered over the IEEE 1394 asynchronous mode functionality.

More particularly, on-screen display ("OSD") information is first placed into a bitmap format, for example, representing color data (e.g., red, green, blue) levels for each image pixel (or area) on the display monitor. In one embodiment, twelve-bit color pixel data is employed, however, in an alternative embodiment, twenty-four-bit color pixel data is employed, the latter giving a higher color resolution, but giving up processing speed and data storage space.

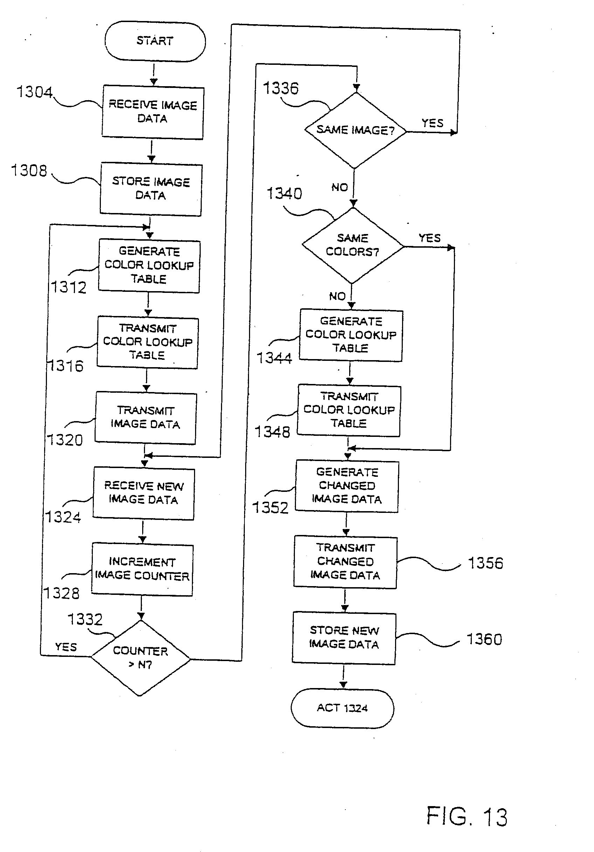

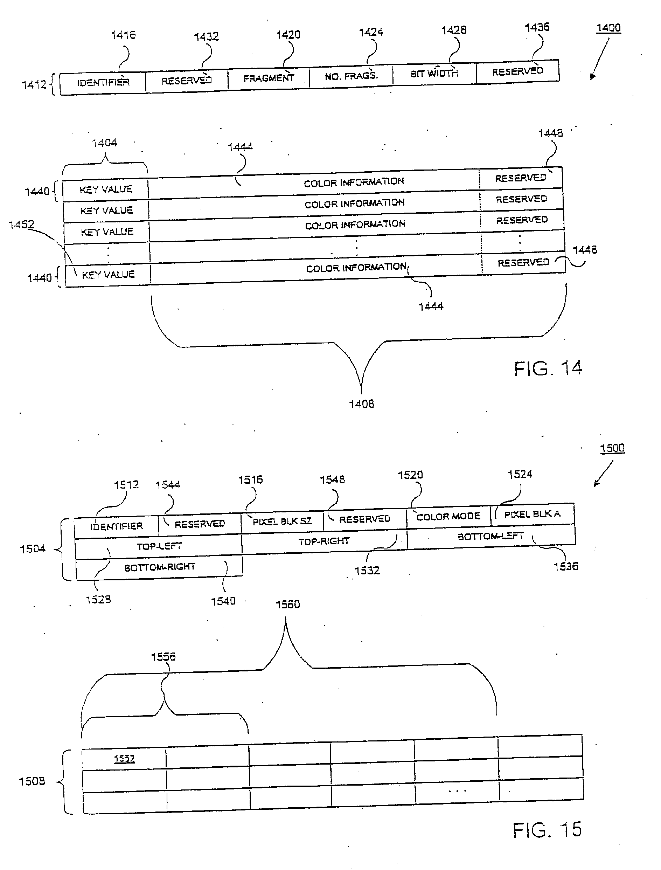

A preferred series of steps for the bitmap transfer (also called "DD-AsyBmp") are depicted in FIG. 13 and described below with reference to FIGS. 14-15. For purposes of illustration, the description below will be described with reference to a controller, e.g., home gateway 504 depicted in FIG. 6, and a video display unit, e.g., TV adapter 604, also depicted in FIG. 6. In other embodiments, the controller can be implemented in a personal computer (e.g., personal computer 524 depicted in FIG. 5). In the acts of the method that follows, the acts are performed by the controller, unless otherwise stated.

First, in act 1304, a first image data is received at the controller. The first image data is preferably a fixed-format data structure, such as a bitmap image. The bitmap image comprises a plurality of locations, with each location having a unique color assigned to it (e.g., twelve-bit or twenty-four-bit color information in a 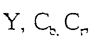 format that includes an additional four or eight bits for an α value too, such as, 6:3:3:4 (YUV alpha) bits and 8:8:8:8 (YUV apha) bits). The first image data is stored in memory at act 1308.

Next, in act 1312, the controller generates a color lookup table (described below with reference to FIG. 14) based on the unique colors detected in the first image. Notably, the color lookup table is independent of pixel location information and is concerned only with the color data contained in the image data. According to one embodiment, generation of the color lookup table comprises the acts of extracting a plurality of unique colors from the fast image data, assigning a unique key value to each of the plurality of unique colors extracted from the first image data, and then populating the color lookup table with the unique key values and corresponding color information.

The color lookup table is transmitted to the video display unit at act 1316. Next, in act 1320, the first image data is transmitted to the video display unit. The structure of the image data is described below with reference to FIG. 15.

In act 1324, a new image data is received by the controller. An image counter is incremented in act 1328. In act 1332 the image counter is tested to determine whether to simply forward the new image or to compare and generate image change information. In a presently preferred embodiment, a new color lookup table is generated after every Nth image received. The value of N can be tuned to correspond to a certain time period (milliseconds). Accordingly, if the image counter is greater than N, then the controller processing returns to act 1312 after act 1332. Depending on the image counter used, the image counter should be reset if the test at act 1332 is successful. If the image counter is less than or equal to N, then processing continues to act 1336.

In act 1336, the new image data and the prior stored image data are compared. If the images, or the present regions-of-interests are the same, then a change does not need to be sent from the controller to the video display unit. Accordingly, the controller can return to act 1324 and wait for a next new image data. It however, the images are not the same, then the colors of the new image data are compared with the colors in the color lookup table in act 1340.

If, as a result of the comparison in act 1340, the colors are not the same, then a new color lookup table is generated in act 1344 and transmitted to the video display unit in act 1348. However, if the colors are the same, then processing continues from act 1340 to act 1352.

In act 1352 an image body data is generated to reflect the changes between the stored image data and the new image data received. At act 1356, the image body data together with the image body data data dictionary is transmitted from the controller to the video display unit. At act 1360, the new image data received (i.e., by the controller in act 1324) is stored in memory and processing returns to act 1324 -- where a next new image data is received.

In a presently preferred embodiment, the bitmap transfer method described above is performed over an IEEE 1394 bus in an asynchronous push mode. Accordingly, it is preferred that an acknowledge signal is returned from the video display unit to the controller after each transmission to ensure that the data was properly received at its destination.

### COLOR LOOKUP TABLE

An exemplary color lookup table is depicted in FIG. 14. The lookup color table 1400 comprises at least two structural elements. First, the lookup color table 1400 comprises a unique key value column 1404. Second, it comprises a color indicator value column 1408. According to a presently preferred embodiment, the unique key value column 1404 holds eight-bit entries, which uniquely identify two-hundred fifty-six colors, or, in other words two-hundred fifty-six color indicator rows 1440. The color indicator value column 1408 holds sixteen-bit entries (twelve-bits of color information 1444 and four-bits of reserved space 1448) which uniquely identify a particular color code needed to create an RGB or similarly encoded color image on the video display unit. In alternative embodiment, the color indicator column 1408 holds thirty-two-bit entries (twenty-four bits of color information and eight-bits of reserved space). Similarly, the unique key value column 1404 can be larger to represent a greater number of distinct colors in the color lookup table.

In a presently preferred embodiment, the color lookup table 1400 further comprises a data dictionary 1412, which is information about the data that follows, i.e., here, the color indicator fields. The data dictionary 1412 comprises a data structure identifier field 1416, for example a one-byte value indicating the present data structure is a color lookup table, a palette fragment number field 1420, identifying the fragment of the overall image to which the color table applies, a number of fragments value field 1424, identifying the number of fragments in the overall image, and a palette bit width value field 1428, identifying the number of bits in each color indicator column. Finally, two bytes (bytes 1432 and 1436) are reserved in the presently preferred data dictionary 1412.

The data dictionary 1412 is approximately six bytes long and the color indicator fields (all together) are approximately five hundred twelve bytes long. The data dictionary 1412 generally immediately precedes the color indicator rows 1440.

### IMAGE DATA STRUCTURE

The structure of the image data transmitted by the controller to the video display unit is depicted in FIG. 15. The image data structure 1500 comprises two parts, a image data data dictionary 1504 and an image data body 1508.

The image data data dictionary 1504 preferably comprises an image data identifier field 1512, telling the receiver that the data structure is image data, a pixel block size field 1516, indicating the structure of the image data body (for example, the number of pixels represented in the image data body 1508), a color mode field 1520 (e.g., eight-bit pixel index, sixteen-bit color information, or thirty-two-bit color information), a pixel block alpha field 1524, and coordinates for the pixel position, for example, sixteen-bit x, y encoded values indicating the top-left position 1528, the top-right position 1532, the bottom-left position 1536 and the bottom-right position 1540. Alternatively, the coordinates for the pixel position can be a single value indicating a particular pre-defined region-of-interest. Two reserved bytes are also contained in data dictionary 1504, they are shown as reserved byte 1544 and 1548. Except as otherwise specified above, the preferred field size for the image data data dictionary 1504 is eight-bits.

The image data body 1508 can presently have three different embodiments. The pixel block size field 1516 and the color mode field 1520 define which of the three embodiments the image data body will take. For example, the image data body 1508 can comprise an eight-bit pixel index, sixteen-bit color information, or thirty-two-bit color information. The sixteen- and thirty-two-bit color information formats are substantially the same as the color indicator column 1408 described with reference to FIG. 14, except that the color information is contained in the image body data 1508. However, according to one of the advantages of the present inventions, the color information is compressed by employing the eight-bit pixel index as the structure for the image body data 1508.

According to the eight-bit pixel index embodiment, only seven hundred sixty-eight (e.g., 32 x 24 pixels) bytes (e.g., byte 1552) of image body data 1508 are needed to convey the image data completely to the video display unit. Redundancies in color information are accordingly removed from the image body data 1508 by use of the combination of the color lookup table 1400 and the eight-bit pixel index. The eight-bit pixel index comprises a plurality of color lookup values wherein each color lookup value represents a particular pixel in the present image. The color lookup values correspond to a particular unique key value 1452 in the color lookup table 1400. Accordingly, when the image data body 1508 size is fixed, for example to 768 bytes, then the eight-bit pixel index embodiment can communicate twice as much image pixel information as the 16-bit color information embodiment and four times as much image pixel information as the 32-bit color information embodiment.

### DOUBLE BUFFERING

FIG. 31 depicts a block diagram of presently preferred hardware 3100 for performing a unique bitmap transfer technique referred to herein as "double-buffering". FIG. 32 is a flowchart depicting the steps performed on the receiving side of a bitmap transfer protocol when double-buffering is employed.

Turning first to FIG. 31, a central server 3104 sends data, such as MPEG streams, from a video or internet service provider to a home entertainment network system 500.

A video display adapter 3108 can be any of a number of home electronic devices, such as a home gateway 504, a VCR, a DVD player, etc. Shown here, the video display adapter 3108 comprises a first interface 3124, preferably an ATM interface, a controller 3128, preferably an IEEE 1394 compliant node, coupled to the first interface 3124, and a second interface 3132, preferably an IEEE 1394 bus interface, coupled to the controller 3128. The video display adapter 3108 components are coupled via a local bus 3156. Furthermore, the controller 3128 is configured to execute sequences of instructions from a computer-readable medium, such as a ROM (not shown). The sequences of instructions are described below with reference to FIG. 32. Finally, the video display adapter 3108 is communicatively coupled to the central server 3104 via ATM communication link 3116.

A video display unit 3112 is communicatively coupled to the video display adapter 3108, preferably via an IEEE 1394 communication link 3120. The video display unit 3112 comprises two general parts: a television adapter 3148 and a television display screen 3152. According to an alternative embodiment, however, the television adapter 3148 does not have to be part of the single video display unit, that is, in the same physical packaging. Rather, the television adapter 3148 can be a stand-alone unit, or it can be embedded into the video display adapter 3108, such as a home gateway 504.

The television adapter 3148 preferably comprises an interface 3136, for receiving the IEEE 1394 communication link 3120, and two display buffers, namely, on-screen display buffer 3140 and off-screen display buffer 3144. The interface 3136, the on-screen display buffer 3140, and the off-screen display buffer 3144 are communicatively coupled via a local bus 3160. According to one embodiment, control logic is implemented by an IEEE 1394 node (not shown) in the television adapter 3148. In an alternative embodiment, control logic is implemented by a field programmable gate array "FPGA", or transistor-transistor logic "TTL" circuitry.

The on-screen display buffer 3140 is configured to store image data that is currently presented on the television display screen 3152, whereas the off-screen display buffer 3144 is configured to store image data that will be, in the future, displayed on the television display screen 3152. Accordingly, the television display screen 3152 is coupled to the on-screen display buffer 3140 via link 3164. However, in an alternative embodiment, both the on-screen display buffer 3140 and the off-screen display buffer 3144 are coupled to the television display screen 3152 and image data presented on the television display screen 3152 can be presented from either buffer.

With regard to the description of the method for double-buffering that follows, it is notable that reserved byte 1544, depicted in FIG. 15, is used herein as a buffer control register. The buffer control register holds one of a number of flags communicating information concerning double-buffering. For example, one flag is an on-screen display buffer flag, another is an off-screen display buffer flag, and a third flag is a swap flag. These flags are described in greater detail herein.

FIG. 32 depicts a method for double-buffering of bitmap transfer data according to a preferred embodiment of the present invention. In act 3204, a color lookup table 1400 is received by the television adapter 3148 and stored in a memory (not shown). Next in act 3208, image data 1500 is received by the television adapter 3148. In acts 3212 through 3220, a image data data dictionary 1504 is analyzed to determine the value of the buffer control register.

If the value of the buffer control register 1544 indicates that the image data contained in the image data body 1508 should be placed into the on-screen display buffer, then processing continues to act 3224, where the image data in the image data body 1508 is stored in the on-screen display buffer 3140. Subsequently, the image data in the on-screen display buffer 1508 is presented on the television display screen 3152. Under normal circumstances, presenting the image data on the television display screen 3152 includes retrieving color values from the color lookup table 1400 that was received in act 3204. In certain circumstances, a color lookup table 1400 is not received for every single image data 1500 received by the television adapter 3148, rather, the color lookup table 1400 is shared between successive image data 1500.

If the value of the buffer control register 1544 indicates that the image data contained in the image data body 1508 should be placed into an off-screen display buffer 3144, then processing continues to act 3232, where the image data in the image data body 1508 is stored into the off-screen display buffer 3144.

If the value of the buffer control register 1544 indicates a "swap", then no image data body 1508 is received by the television adapter 3148. Rather, the image data in the off-screen display buffer 3144 is copied to the on-screen display buffer 3140 in act 3236. Subsequently, processing continues to act 3228, which was previously described.

After acts 3232 and 3228, as well as after an invalid flag from the buffer control register, the present iteration of the method ends, and processing can continue again at act 3204, or alternatively act 3208.

Successive receipts of image data for the on-screen display buffer 3140 and the off-screen display buffer 3144, followed by a "swap" flag, can create the perception of animation on the television display screen 3152. The present technique is useful for displaying animated movement of objects for advertising, as well as scrolling banners or text. Notably, since the buffer control register 1544 is controlled by the controller 3128, the timing of the animation effects are too.

### ADDRESS MAPPING

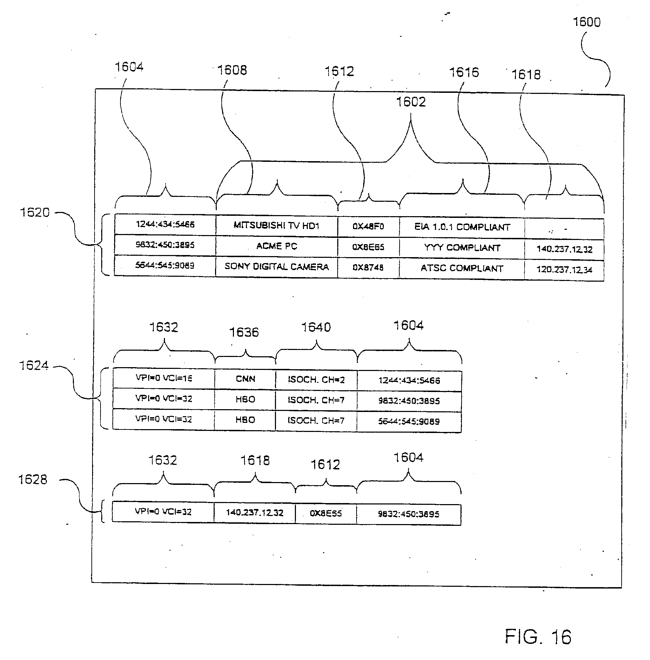

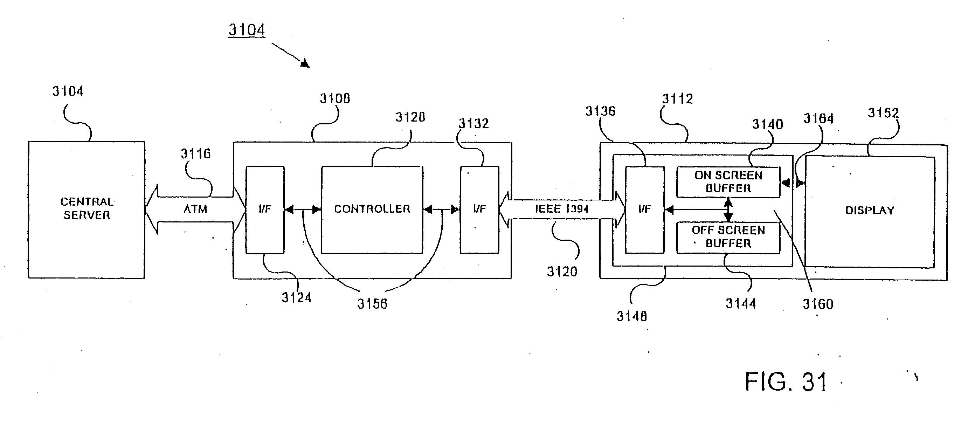

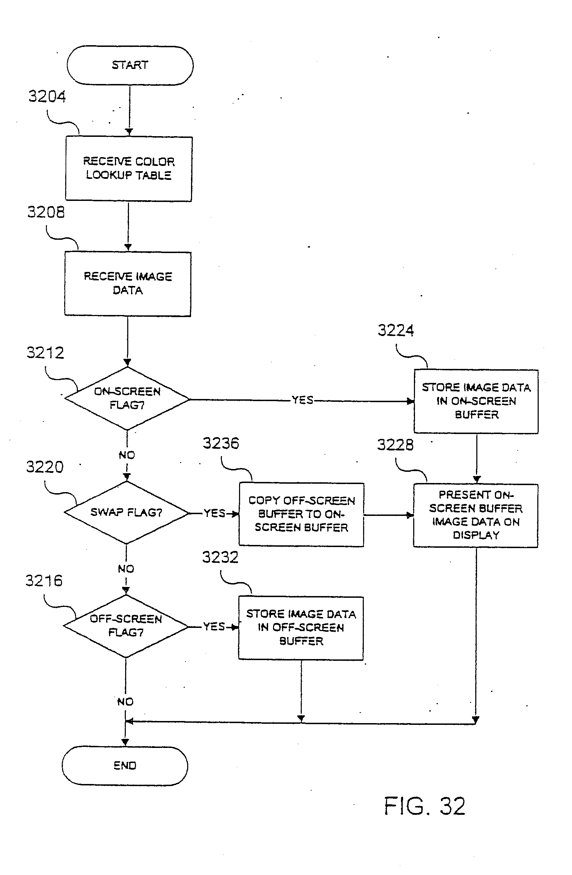

FIG. 16 depicts an exemplary address mapping table 1600. The address mapping table 1600 preferably comprises at least four columns and as many rows as there are devices on the home entertainment network 500. The address mapping table 1600 is preferably partitioned into three distinct sections. The first section 1620 comprises IEEE 1394 service data, the second section 1624 comprises MPEG service data, and a third section 1628 comprises IP service data. Each section has its own "mini-table" for information, although the address mapping table 1600 is physically a single table.

In the IEEE 1394 section 1620, the first column is the node unique ID column 1604, the node unique ID is permanently encoded into the hardware or ROM of the node 104. The next group of columns are node attribute columns 1602. The node attribute columns include a common name column 1608, which identifies a particular node by a user selected/programmed name that is stored in the node, a node_ID column 1612, which contains a dynamically assigned 16-bit node_ID, a node type column 1616, and an IP address column 1618.

In the MPEG service section 1624, the first column is the ATM VPI/VCI column 1632, the next column is the program information column 1636, the third column is the IEEE 1394 isochronous channel column 1640 and the last column is the node unique ID column 1604.

In the IP service section 1628, the first column is the ATM VPI/VCI column 1632, the net column is the IP address column 1618, the third column is the node_ID column 1612, and the last column is the node unique ID column 1604.

The address mapping table 1600 is created by the IEEE 1394 driver (e.g., IEEE 1394 driver 816 shown in FIG. 8) when a bus reset occurs. The IEEE 1394 driver receives a response from each node in the IEEE 1394 bus (e.g., IEEE 1394 bus 568 shown in FIG. 5) identifying the node's node unique ID and other information. Based on the information received from the node, the IEEE 1394 driver adds the node unique ID to the address mapping table 1600 and then queries the particular node for additional information (e.g., common name, node capabilities and IP address). The IEEE 1394 driver assigns a valve to node_ID column 1612 for the node.

The methods and processes described herein are preferably performed by one or more processors executing one or more sequence of instructions stored on a computer-readable medium, such as a persistent disk, a CD-ROM, a floppy disk, a volatile memory (e.g., random access memory "RAM"), or a non-volatile memory (such as a flash memory or read-only memory "ROM"), rather than in a particular hardware arrangement. However, in the broader spirit of the inventions, various aspects of the methods and processes described herein can be implemented via hardware components such as TTL logic, or gate arrays. Furthermore, if a preference for a firmware level, e.g., a lower level programmic implementation of software component that is, generally, stored in ROM, or an application level, e.g., a higher level programmic implementation of a software component that runs over firmware, an operating system kernel, and/or server processes, software component is desired, then that preference is specified. If no preference is specified, then either level of implementation is acceptable. Accordingly, the written description and accompanying figures contained herein are to be regarded in an illustrative, rather than a restrictive sense.

## Claims

1. A method of transferring image data from a controller to a video display unit, comprising:
receiving first image data at the controller;
generating a color lookup table based on the first image data;
transmitting the color lookup table from the controller to the video display unit;
transmitting the first image data from the controller to the video display unit;
receiving second image data at the controller;
comparing the second image data to the first image data;
generating third image data representing differences between the first image data and the second image data; and
transmitting the third image data from the controller to the video display unit.

2. The method of claim 1, wherein the color lookup table is generated by
extracting color information including one or more unique colors from the first image data;
assigning a unique key value to each unique color extracted from the first image data; and
populating the color lookup table with the unique key values and corresponding color information.

3. The method of claim 1, wherein the third imaging data is transmitted to the video display unit over an IEEE 1394 asynchronous transmission mode.

4. The method of claim 1, wherein the third image data represents color differences between the first and second image data.

5. A video display unit adapter, comprising:
a first interface configured to receive successive image data transmissions;
a controller coupled to the first interface and configured to
receive a first image data transmission from the first interface and generate a corresponding color lookup table, and
receive a second image data transmission from the first interface and generate image update data representing differences between the first and second image data transmissions; and
a second interface coupled to the controller and configured to transmit the respective color lookup table and image update data to a video display unit.

6. The video display unit adapter of claim 5, wherein the first interface is an IEEE 1394 interface.

7. The video display unit adapter of claim 5, wherein the second interface is an IEEE 1394 interface.

8. The video display unit adapter of claim 7, wherein the second interface transmits the color lookup table and image update data to the video display unit over an IEEE 1394 asynchronous transmission mode.

9. The video display unit adapter of claim 5, wherein the first interface receives data in a non IEEE 1394 compliant format, and wherein the second interface transmits data in an IEEE 1394 compliant format.

10. The video display unit adapter of claim 5, wherein the image update data represents color differences between the first and second image data.

11. A video display system, comprising:
a television display screen; and
a television adapter communicatively coupled to the television display screen, the television adapter comprising
an on-screen display buffer configured to hold image data presently displayed on the television display screen, and
an off-screen display buffer configured to hold image data to be displayed on the television display screen, wherein
the television adapter is configured to swap data between the off-screen display buffer and the on-screen display buffer upon command.

12. The video display system of claim 11, wherein the television display adapter further comprises an IEEE 1394 interface configured to receive a color lookup table and image data, and furthermore to store the image data in one of the display buffers, the IEEE 1394 interface communicatively coupled to both the on-screen display buffer and the off-screen display buffer.

13. The video display system of claim 12, wherein the image data comprises a buffer control flag, and wherein the television adapter is configured to analyze the control flag and in response cause the image data in the off-screen display buffer to be presented on the television display screen.

14. The video display system of claim 11, wherein the television adapter and the television display screen are contained in a single physical unit.

15. A method for double buffering image data for presentation on a television display screen, comprising:
receiving a first image data comprising a first buffer control flag, the first buffer control flag configured to direct the first image data to an on-screen display buffer;
presenting the first image data in the on-screen display buffer on a television display screen;
receiving a second image data comprising a second buffer control flag, the second buffer control flag configured to direct the second image data to an off-screen display buffer; and
receiving a third image data comprising a third buffer control flag, the third buffer control flag configured to cause the second image data in the off-screen display buffer to be presented on the television display screen.

16. The method of claim 15, further comprising copying the second image data from the off-screen display buffer to the on-screen display buffer.

17. The method of claim 15, further comprising
receiving successive patterns of image data alternately comprising image data for the off-screen buffer and the third buffer control flag; and
in response to receiving the successive patterns of image data, displaying on the television display screen an animated image.

18. The method of claim 15, further comprising
receiving a color lookup table, wherein
the act of displaying the image data on the television display screen comprises retrieving a color value from the color lookup table, the color value corresponding to a particular image data pixel to he presented on the television display screen.
